# EUROPEAN PATENT SPECIFICATION

(11) **EP 1 650 947 B1**
(45) Date of publication and mention of the grant of the patent: **25.03.2009**
(21) Application number: 05109536.2
(22) Date of filing: 13.10.2005
(51) Int. Cl.: G06K 17/00

(54) **Apparatus and method for automatically analysing a filled in questionnaire**
Vorrichtung und Verfahren zur automatischen Analyse eines ausgefüllten Fragebogens
Appareil et méthode pour analyser automatiquement un questionnaire rempli

(30) Priority: 21.10.2004 EP 04105201
(43) Date of publication of application: 26.04.2006
(73) Proprietor: Océ-Technologies B.V., 5914 CC Venlo (NL)
(72) Inventor: Slijp, Dion F., 6523 RP, Nijmegen (NL); Jager, Jodocus F., 6511 AK, Nijmegen (NL); Kruizinga, Peter, 5912 XX, Venlo (NL)
(74) Representative: van Meeteren, Arend Anthonie

(56) References cited:
- US-A- 5 452 379
- US-A- 5 943 137
- US-A1- 2003 086 116

## Description

The invention relates to an apparatus and a method for automatically analysing a filled in questionnaire. The invention also relates to a digital copier incorporating such an apparatus.

### BACKGROUND OF THE INVENTION

The invention is applicable to a questionnaire that could be for example a test or an inquiry. The use of a questionnaire is common in environments such as training students during education, measuring consumer needs for a marketing study and measuring the preferences of a group of people.

A questionnaire workflow comprises the steps of preparing the questionnaire, distributing the questionnaire, filling in the questionnaire, collecting the filled-in questionnaire and analysing the questionnaire. This workflow can be partly on paper or digitally. A paper questionnaire provides an easy user interface and a digital questionnaire provides the possibility of automation and fast distribution.

To date, the approach in producing educational materials for computers has been highly inefficient and expensive. Often people read, fill in and analyse questionnaires on paper, such as in education for presenting questions and filling in of answers. A teacher revises the multiple-choice tests on paper with pencil. This is a tedious process for the teacher: it takes a lot of his time and it costs a lot of his concentration and so can cause feelings of frustration.

U.S. Pat. No. 6,175,841, to Loiacono, discloses a questionnaire workflow. This method and apparatus is for transforming educational materials composed of questions and answers into an on-line computer. By scanning of paper of textual and/or graphical material sometimes containing pencil lines are computer readable images created. The captured images are modified by the application of answer formats, examples of that include underlining, highlighting, and circling a correct answer. The modified captured images are stored for distribution to users. Answer formats are automatically applied to the questions thus allowing them to be answered in a computer interactive form.

Disadvantage of such a system is that it requires a difficult and time consuming configuration process in preparing an on-line interactive questionnaire.

Another example of such a method and system is known from U.S. Pat. No. 5,555,101 to Larson and Faul. This method and system is for interactively creating forms, including displaying the forms during creation and interpreting completed forms received via a facsimile device. The system includes the following features: automated reminder, automated data export, suspense processing and automated confirmation. A disadvantage of such a system is that it requires a difficult and time consuming configuration process in preparing an on-line interactive form.

Another example of such a method and system is known from U.S. Pat. No. 2003/0086116 A1 to Hall and McCoy. This method is for automatically generating commentary regarding a hard copy image. The original hard copy image is a completed test answer sheet; the system automatically evaluates an exam and generates a written report based on the examinee's answers. A method to detect a part of the answer locations has been described. To get the complete set of answer locations a configuration process is required.

A major drawback of the prior art for automatically analysing a filled in paper questionnaire is that it requires a difficult and time consuming configuration process in the preparation of the automatic analysing process for filled in paper questionnaires.

### SUMMARY OF THE INVENTION

To overcome drawbacks of the prior art it is an object of the present invention to reduce the time needed to configure the automatic analysing process for filled in questionnaires. This is achieved by a method comprising the following steps:
a) providing a questionnaire having answer locations,
b) scanning one copy of the questionnaire with the answer locations filled in in a predetermined way,
c) providing a questionnaire containing filled-in answer locations,
d) scanning the filled-in questionnaire to a third scan and
e) automatically Judging the answers,
   which is characterised by
f) scanning one more copy of the questionnaire with the answer locations filled in differently and complementarily to the scanned copy mentioned in step b),
g) automatically determining the answer locations by comparing the scans mentioned in step b) and step f).
This method is based upon the observation that paper provides the best user interface for the configuration process for automatically analysing a filled in paper questionnaire. This method works for any questionnaire on paper, such as free-form hand-written questionnaire or a print made from an application running on a computer containing a digital document. Thus, the invention provides an intuitive and easy way to configure the automatically analysing of a filled in paper questionnaire.
By filling in the questionnaires differently and complementarily in step f, i.e., such that the filled-in answer locations of the two copies together precisely form the entire set of answer locations, the answer locations are uniquely defined and can unambiguously be found by comparing the two scans.

With a first embodiment, an operator - for example a teacher - configures the automatic answer locations, the answer locations are uniquely defined and can unambiguously be found by comparing the two scans.

With a first embodiment, an operator - for example a teacher - configures the automatic analysing process for filled in paper questionnaires such as a multiple-choice test. The teacher copies not filled in questionnaire to test students and include two additional copies. The two additional copies are for the first master and the second master.
The teacher uses the first master to indicate all correct answers and uses the second master to indicate all wrong answers. The teacher scans the first master and second master on an apparatus incorporating the invention such as a digital copier or a scanner connected to a personal computer.
In this first embodiment, according to the invention, the method comprises the steps of:
automatically determining answer locations by comparing a first scan and a second scan, where one of the scans is made from the questionnaire with all correct answers filled in and the other scan is made from the questionnaire with all wrong answers filled in and automatically labelling every answer location as a correct answer or a wrong answer.

In a further embodiment, according to the invention, the method comprises the steps of:
finding all answers on the third scan by using the answer locations, deciding per answer whether the answer is a wrong answer or a correct answer based upon the label of the answer location and creating a corrected questionnaire.
   With this embodiment, the operator starts the analysing process of the filled in paper questionnaires by scanning in all filled in paper questionnaires. Thereafter the method finds all filled in answers on the third scan by using the answer locations. All questions are found by grouping together answer locations based upon spatial information such as distance between answer locations or a typical spatial positioning of the answer locations. The labels indicate the wrong and correct answer positions. For example, when the answer location on the third scan contains an answer and the answer location label indicates 'wrong', then this filled in answer is wrong. This way the correct and wrong answers per question are known and a corrected questionnaire is automatically created.

With a second embodiment, an operator, for example a marketer, can configure the automatic analysing process for the filled in paper questionnaire such as an inquiry.

The marketer makes a number of copies from the original questionnaire needed to inquire a group of people and includes two additional copies. The two additional copies are for the first master and the second master. The marketer uses the first master to indicate all possible answers and the marketer provides the second master, which is a not filled in paper questionnaire. The marketer scans the first master and second master on an apparatus incorporating the invention such as a digital copier or a scanner connected to a personal computer.
In this second embodiment, according to the invention, the method comprises the step of automatically determining answer locations by comparing a first scan and a second scan, where one of the scans is made from the questionnaire with all answers filled in and the other scan is made from the questionnaire with no answers filled in.

In a further embodiment, according to the invention, the method comprises the steps of:
finding all answers on the third scan by using the answer locations and creating an overview of a plurality of third scans comprising a distribution of answers.
   The inquiry is automatically processed resulting in an overview.

The dependent claims indicate useful details and further developments of the invention.

The invention is explained with reference to the following exemplified embodiments of the present invention and is illustrated by reference to the drawings.
These embodiments serve to illustrate the invention and should not be regarded as a limitation thereof.

### BRIEF DESCRIPTION OF THE DRAWINGS

The invention is explained in detail with reference to embodiment accompanying drawings wherein:
figure 1 shows an apparatus according to the present invention;
figure 2 shows a digital copier according to the present invention;
figure 3 shows functional blocks according to the present invention;
figure 4 shows a flow diagram of the method for automatically analysing a filled in paper questionnaire;
figure 5A shows a flow diagram of the method for automatically judging the third scan based upon the answer location of a filled in test;
figure 5B shows a flow diagram of the method for automatically judging the third scan based upon the answer location of a filled in inquiry;
figure 6A shows a multiple choice test in which all correct answers are filled in, the so called first master;
figure 6B shows a multiple-choice test in which all wrong answers are filled in, the
so-called second master;
figure 7A shows a questionnaire in which the student's answers are filled in;
figure 7B shows a corrected questionnaire;
figure 8 and 9 presents hand-written form-free corrected questionnaires;
figure 10 shows a test summary.
figure 11A shows a questionnaire;
figure 11B shows an example of a questionnaire in which all answers are filled in on paper, the so-called second master;
figures 12A until 12F show filled in paper questionnaires of a group of people;
figure 13 shows a distribution of answers made for each of the questions that is overlaying the third scan;

### DETAILED DESCRIPTION OF THE INVENTION

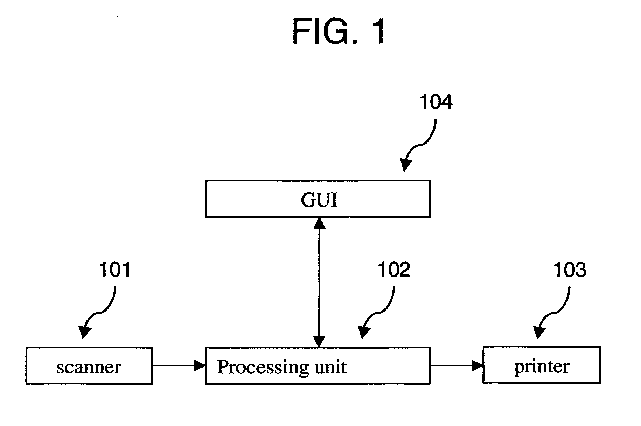

Figure 1 illustrates an embodiment of an apparatus for automatically analysing a filled in paper questionnaire, according to the present invention.
Such an apparatus comprises a scanner (101), a processing unit (102) and possibly with means (104) to interact with the processing unit, to give response to an operator and a printer (103). The basic apparatus has a scanner connected with the processing unit (102) such as a computerised system. The more advanced apparatus comprises an operator console (104) that provides the user interface to the system according to the invention. The operator console contains a display and data entry means, such as available for a personal computer or laptop. The scanner (101) scans in the first master, the second master and a filled in questionnaire to the processing unit (102), wherein the first master, the second master and the filled in questionnaire have the same questionnaire as original. A method executed with the processing unit (102) determines the answer locations automatically by comparing the first scan, derived from the first master, and the second scan, derived from the second master, and automatically judges the third scan, derived from the filled in questionnaire, based upon answer locations. Many variations of the system are possible. In a first variant, all components of figure 1 are incorporated into a digital copier. In a next variant, the scanner (101), method (102) and possibly a printer (103) are remotely connected.

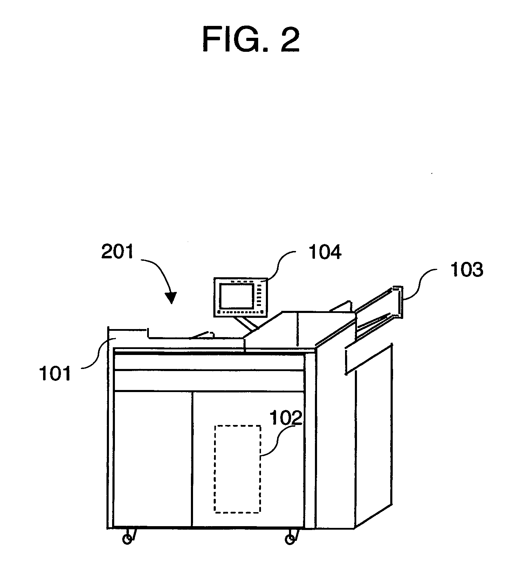

Figure 2 illustrates a block diagram of an embodiment of a digital copier (201) according to the present invention. Such a digital copier comprises a scanner (101), a processing unit (102) such as a controller and possibly with means (104) to interact with the computerised system and possibly a printer (103).

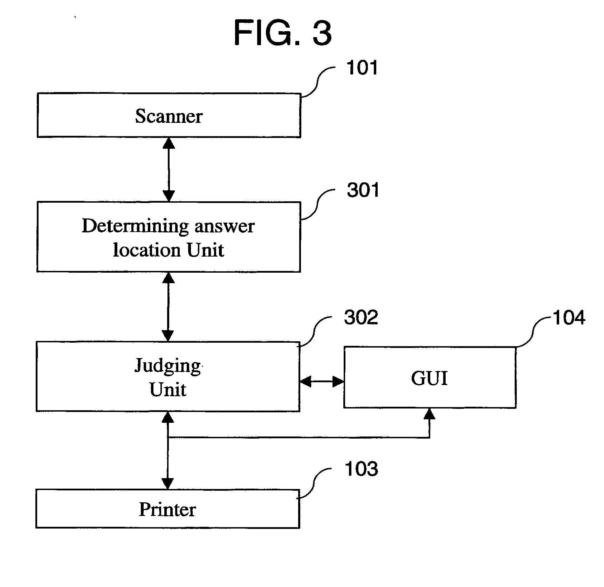

Figure 3 illustrates a block diagram according to the present invention. The scanner (101) converts the first and second master to respectively the first scan and second scan and converts the filled in questionnaire to the third scan. The first, second and third scan are transported to the determining answer locations unit (301) comprising the image pre processing which aligns the first, second scan and third scan, removes equal information between the first scan and the second scan from both the first and second scan, identifies on the first and the second scan the answer locations and labels the answer locations differently based upon being part of a first set or a second set. The answer locations with their labels and the third scan are transported to the judging unit (302) which derives questions, finds questions with problems such as that no answer is filled in for this question. The judging unit (302) communicates the found problems to the operator via a human interface such as an operator panel or graphical user interface (104). The judging unit (302) gives a test result and/or test mark to the third scan based upon the answer locations with their labels and makes a summary of the results. Possibly, the printer (103) and/or another human interface (104) will convert the judged questionnaire and the summary of the results to a readable form.

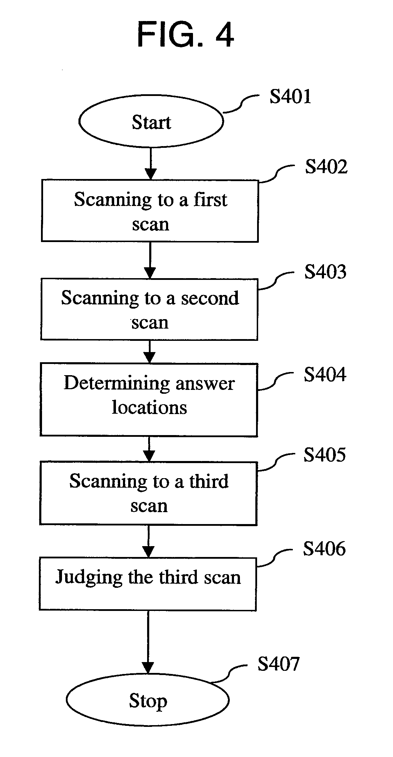

Figure 4 illustrates a flow diagram of an embodiment of the method for automatically analysing a filled in paper questionnaire. Starting from the starting position 401, in step 402 the first master is scanned on scanner (101) to a first scan. At step 403 the second master is scanned on scanner (101). At step 404 the answer locations are automatically determined by comparing the first scan and the second scan. By comparing the scans it is determined which answer locations are filled in on the first master and are not filled in on the second master and vice versa.
However, because the scanner document feeder is not perfect, the first scan is aligned with the second scan before the scans are compared. The alignment of the scans can be done on several ways as described in the art. One way of alignment is creating a projection profile of the first scan and second scan, by adding all black pixels in each row for the vertical profile and all back pixels in each column for the horizontal profile, from the long and the short side of the scans. By comparing the vertical and horizontal profile the misalignment in number of pixels can be determined and corrected by shifting one of the scans so that both profiles are matching closely. Thereafter the algorithm determines the answer locations on the questionnaire by removing all equal information between the first and the second scan from the first and second scan using for example an area-by-area comparison. Thereafter a connected component analysis is performed on both the scans to find the boundary of the answer locations and finally all small components are removed from both the scans as they are considered to be noise. Now all answer locations are found on both scans. Finally, all answer locations are labelled.

An example for labelling in case of an inquiry: is a questionnaire for measuring information derived from a certain group of people. For such a questionnaire, the first master is the questionnaire with all answers filled in and the second master is the questionnaire with no answers filled in. The method will understand that in case one of the masters has no answer locations at all, that all found answer locations on the other master must be labelled as correct.
An example for labelling in case of a test: is a multiple-choice test. The scan with the higher number of answer locations contains all wrong answer locations and so these answer locations are labelled as wrong answers and the scan with the lower number of answer locations contains all correct answers and so these answer locations are labelled as correct answers.
An alternative approach is that the label selection is based upon a selection means for an operator indicating whether the first master or the second master is scanned or the label selection is predetermined such that the first master is always scanned before the second master or visa versa.
In the next step 405 a questionnaire is scanned to a third scan. In step 406, the third scan is automatically judged based upon the answer location. Finally, the method stops in step 407.

The person trained in the art will understand that an embodiment of the invention is capable in handling both: a questionnaire for inquiring a distribution of answers made for each of the answers for measuring information derived from a certain group of people and a questionnaire for testing a certain group of people.

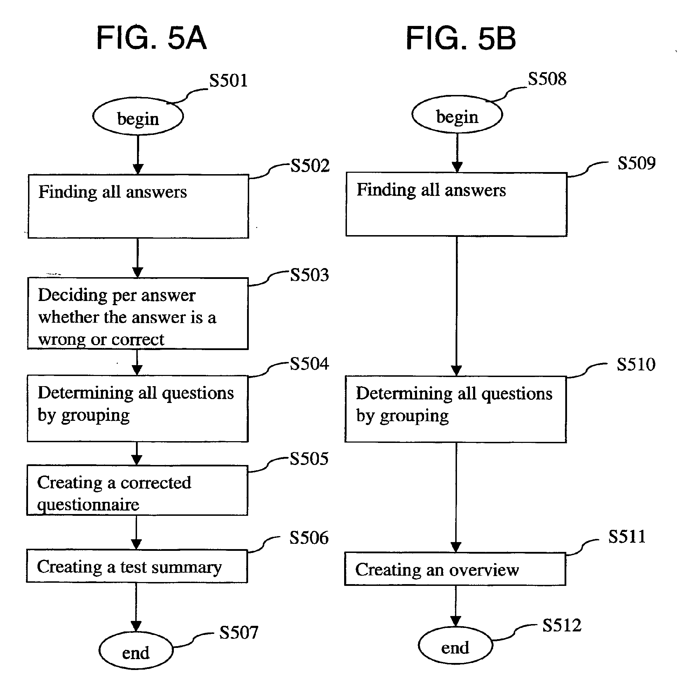

Figure 5A illustrates a flow diagram of first embodiment of the invention for automatically judging the third scan based upon the answer location, which is part of step 406 of figure 4. This flow diagram illustrates a part of automatically judging a test. Starting from the starting position 501, in step 502 the filled in paper questionnaire is scanned on scanner (101) to find all answers on the third scan by using the answer locations. This can be done, for example, by determining the coverage. The coverage is the percentage of black pixels of all pixels in an answer location of the third scan. To determine if a person has selected the answer on the third scan the coverage is calculated per answer location on the third scan. When the coverage for an answer location exceeds a certain threshold such as a certain percentage, then is automatically determined that this answer is filled in. Thereafter in step 503 is decided per answer location, whether the filled in answer or not filled in answer is a wrong or correct answer based upon the label of the answer location.
After done so, in step 504, all questions are determined by grouping together answer locations based upon spatial information. Before this step only the notion of answers exists without knowing to which question the answers belong. Without this step, it is not possible to judge the questionnaire. When, after determination of a question, a problem for this question is detected such as 'no answer is given' or 'too many answers are filled in' then this problem is presented to the operator. In such a case, the operator will select by means: the intended answer, 'no answer is filled in' or 'too many answers are filled in'. Thereafter the embodiment of the invention decides per answer whether it is correct or wrong and/or determines per question whether the question is answered correctly or wrongly. From this, the test result can be derived. Step 505 creates a corrected questionnaire by overlaying the third scan with a correction symbol and a test result and/or test mark. Possibly, an extra step 506 can be available. In this step, a test summary is automatically created which comprises the test results and/or test marks of all third scans. Thereafter the flow diagram stops in step 507.

Figure 5B illustrates a flow diagram of second embodiment of the invention for automatically judging the third scan based upon the answer location, which is part of step 406 of figure 4. This flow diagram illustrates a part of automatically judging an inquiry. Starting from the starting position 509, in step 510 the filled in paper inquiry is scanned on scanner (101) to find all answers on the third scan by using the answer locations. All filled in answers are labelled as correct answers. Possibly, in an extra step 510, all questions are determined by grouping together answer locations based upon spatial information. After determination of a question, a problem can appear such as 'no answer is given' for this question. This problem is presented to the operator. In such a case, the operator will select, by means of an operator panel, the intended answer. In step 511 the third scan is overlaying with a distribution of answers made for each of the answers. Overlaid on the answer location is the selection percentage of an answer with respect to all filled in inquiries. It will be clear that step 510 is an enhancement so step 510 is not necessary to be able to create the overview of step 511

### EXAMPLES

To illustrate the working of the method some examples are given.

### Example 1

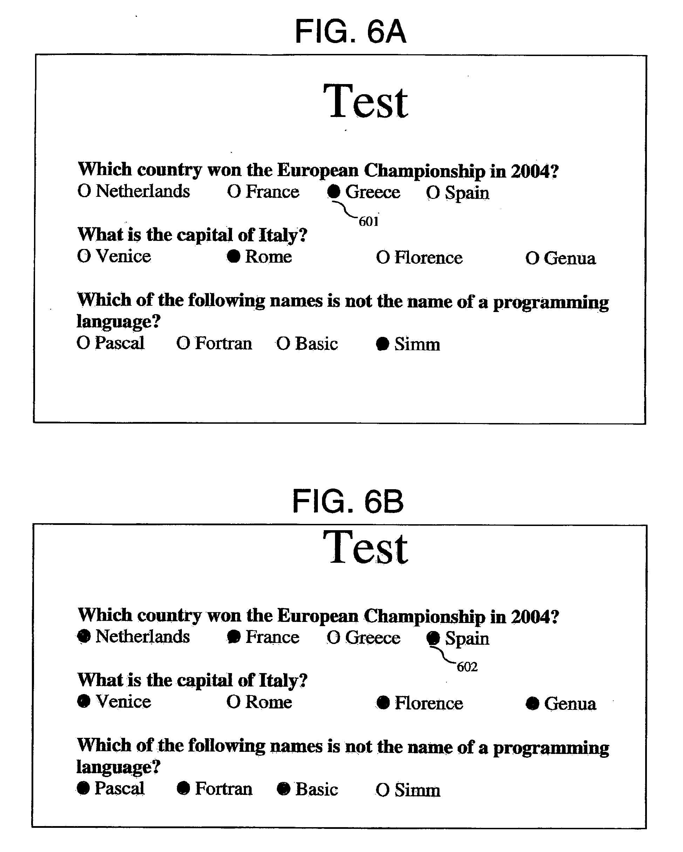

Figure 6A is an example of a multiple-choice test in which correct answers (601) are filled in on paper, the so-called first master. In figure 6B the second master - wrong answers (602) are filled in on paper - is shown. Both masters are scanned (101) and handled by image processing in the determining answer location Unit (301) resulting in finding all answer locations.

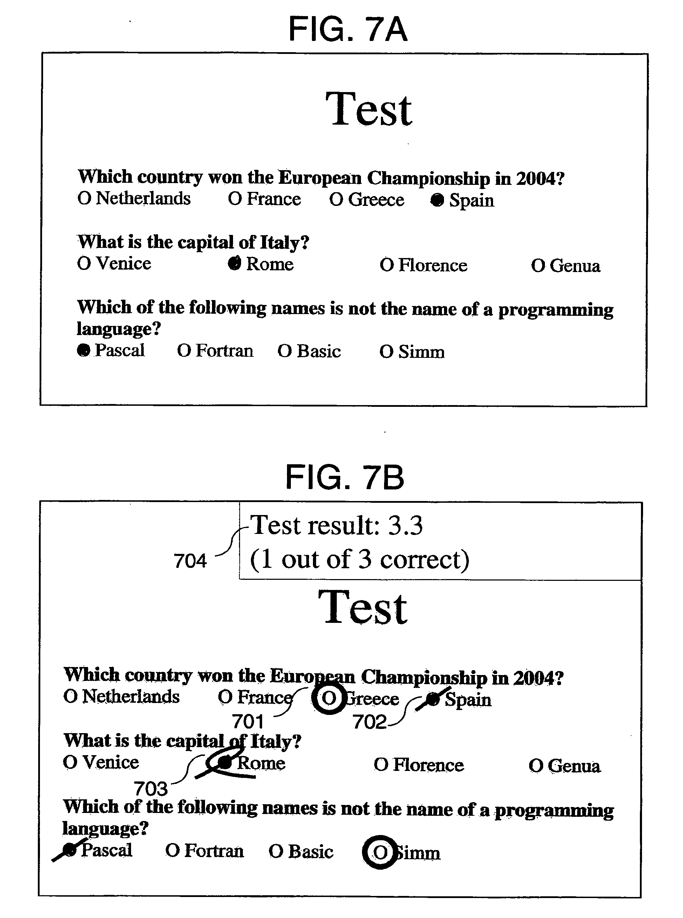

Figure 7A is an example of a filled in multiple choice test - filled in questionnaire -. The filled in questionnaire is scanned (step 405) and automatically judged (step 406) resulting in a corrected questionnaire (step 505). In figure 7B, an example of a corrected questionnaire is shown. Examples of correction symbols that could be used on the corrected questionnaire are 'this should be the answer'-symbol (701), 'this is not the correct answer'-symbol (702), and 'the correct answer is filled in'-symbol (703). Furthermore, the test result (704) is overlaying on the third scan.

### Example 2

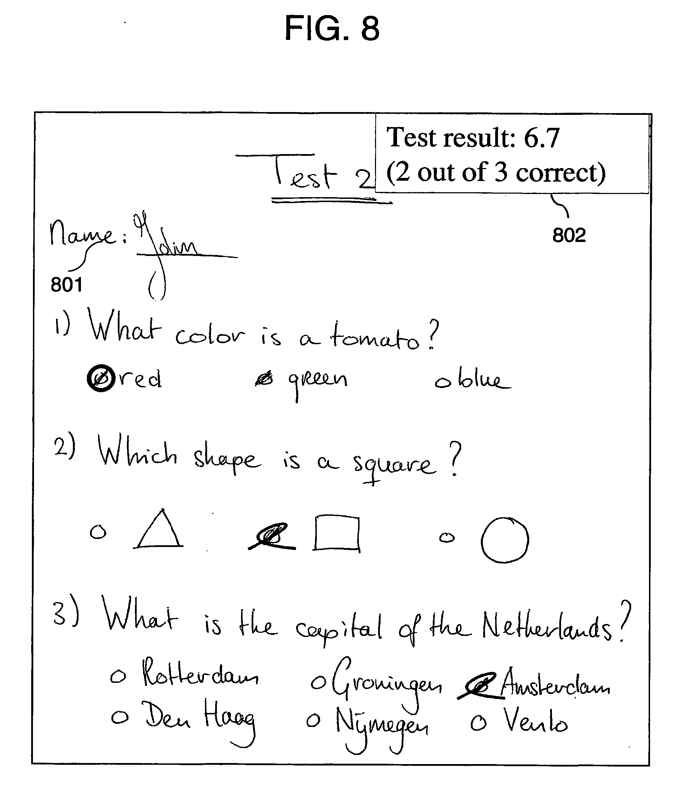

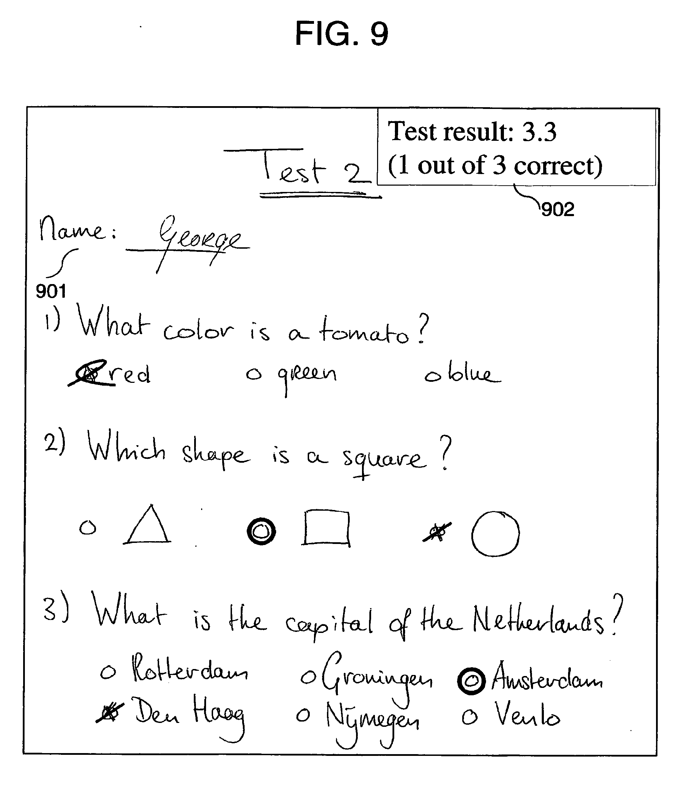

In figure 8 and 9 embodiments are depicted of hand-written form-free questionnaires. These are examples of embodiments of the invention illustrating that any form of questionnaire can be judged by the invention, so without the need that an operator digitally configures the configuration process. The questionnaire of figure 8 is filled in on paper by John (801). John has a test result of 6.7 due to 2 answers correct out of 3 (802).
Incorporated in the embodiment of the invention is the possibility to have two correct answers for one question. For example, the first question in figure 8 has two correct answers: a ripe tomato is red and a growing tomato is green. Depending on the scoring model score points are given for example per correct answer, per correct answers, per not wrong answers or per correct question.
The questionnaire of figure 9 is filled in on paper by George (901). George has a test result of 3.3 due to 1 answer correct out of 3 (902). Several such questionnaires are filled in and processed resulting in a test summary.

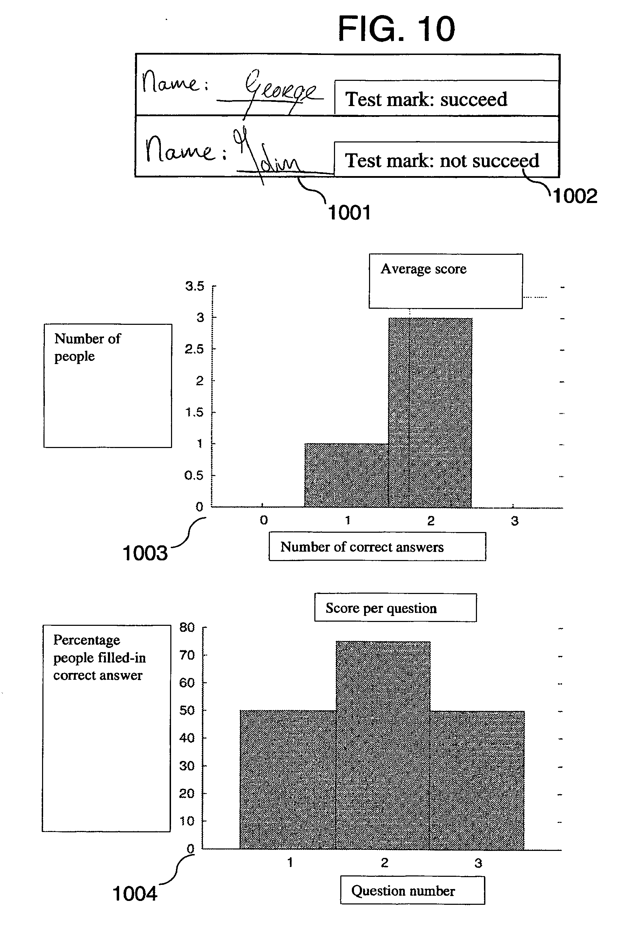

In figure 10 is an embodiment of a test summary shown. Scan parts containing the names of George and John are shown (1001), which is combined with an example of test marks (1002). The statistics overview could comprise for example the number of correct answers related with the number of people (1003), or the percentage of people that filled in the correct answer related with the question number (1004).

### Example 3

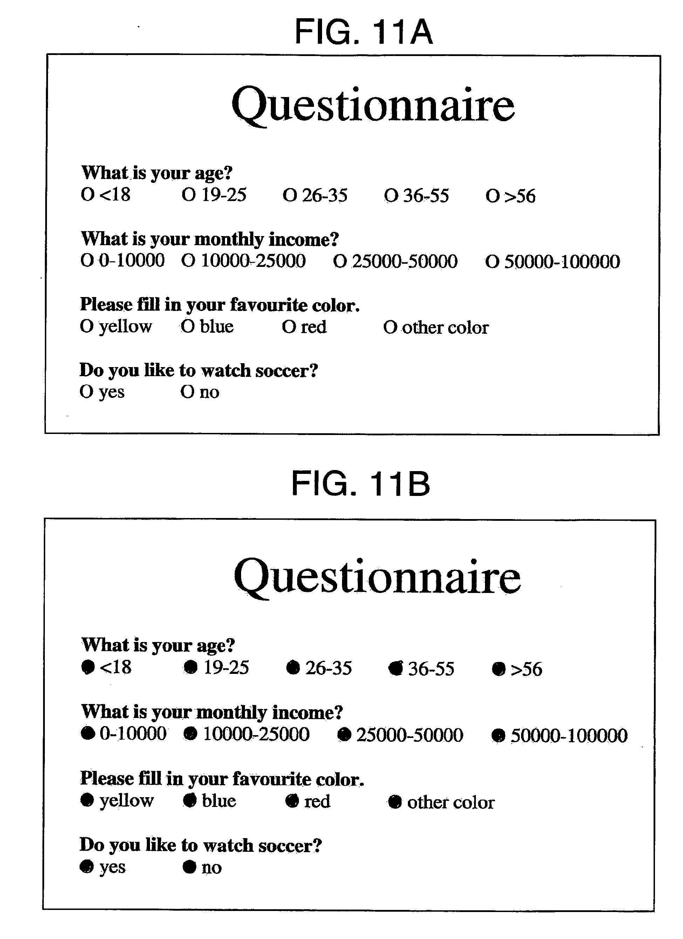

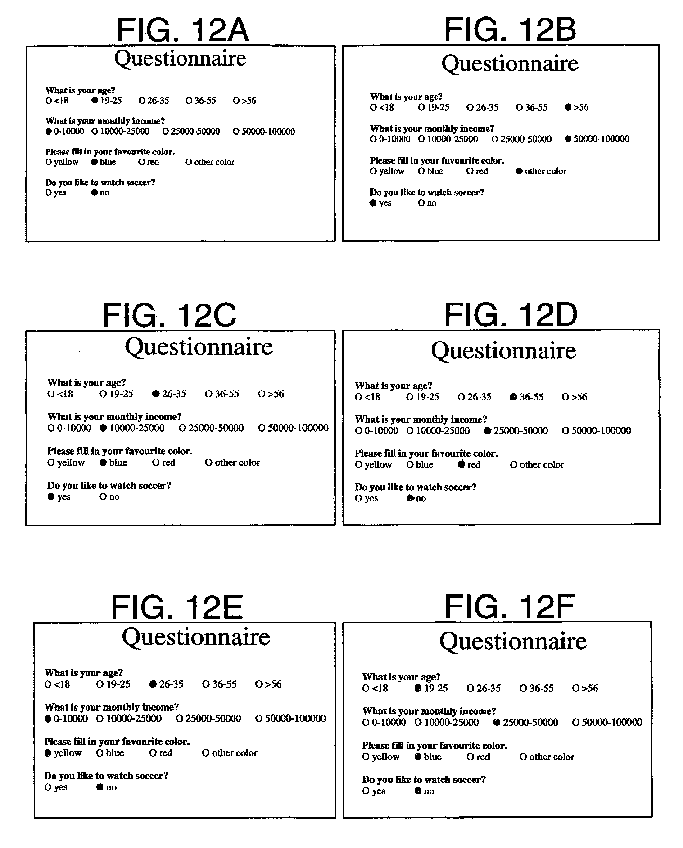

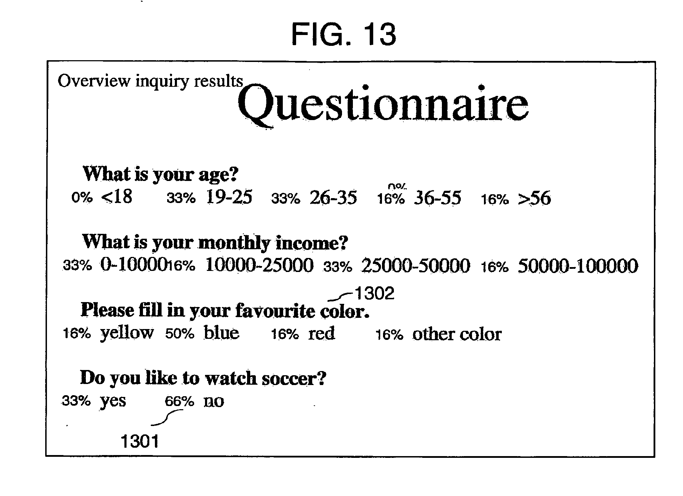

The configuration process is done partly on paper by using the inquiries of figures 11A and 11B. Figure 11A is an example of an inquiry in which no answers are filled in. In figure 11B all answers for this inquiry are filled in on paper. In figure 12A until figure 12F six inquiries filled in are shown on paper, each filled in by a different person. These six questionnaires are scanned in (step 405) and are automatically judged (step 406 described more in detail with figure 5B). An embodiment of the result of this step is depicted in figure 13: an example of a distribution of answers made for each of the answers overlaying the scanned in questionnaire (1301). It should be possible in an apparatus incorporating the invention that per inquiry question sometimes more than one answer could be filled in and so more than one answer per question is contributing to the distribution of answers. This is done by adding up the number of answers given for an answer location and relating the total of number of answers given for an answer location with the total number of inquiries. An example of such a question is the third question (1302) where a person could have two or more favourite colours such as yellow and blue.

For the present invention thus described, it will be obvious that the same may vary in many ways. Such variations are not a departure from scope of the invention, and all such modifications would be obvious to one skilled in the art intended to be included within the scope of the following claims.

## Claims

1. A method for automatically analysing a filled in questionnaire comprising the steps of:
a) providing a questionnaire having answer locations,
b) scanning one copy of the questionnaire with the answer locations filled in in a predetermined way (S402),
c) providing a questionnaire having filled-in answer locations,
d) scanning the filled-in questionnaire to a third scan (S405) and
e) automatically judging the answers (S406),
**characterised by**
f) scanning one more copy of the questionnaire with the answer locations filled in differently and complementary to the scanned copy mentioned in step b) (S403),
g) automatically determining answer locations by comparing the scans mentioned in step b) and step f) (S404).

2. A method according to claim 1, wherein step g) comprises automatically determining answer locations by comparing a first scan and a second scan, where one of the scans is made from the questionnaire with all correct answers filled in and the other scan is made from the questionnaire with all wrong answers filled in and automatically labelling every answer location as a correct answer or a wrong answer.

3. A method according to claim 2, wherein step g) further comprises the steps of selecting a label based upon the number of answer locations on the first scan and the number of answer locations on the second scan.

4. A method according to claim 2 or 3, wherein step e) comprises the steps of:
finding all answers on the third scan by using the answer locations (S502),
deciding per answer whether the answer is a wrong answer or a correct answer based upon the label of the answer location (S503), and
creating a corrected questionnaire (S505).

5. A method according to claim 4, wherein step e) further comprises the step of presenting an improper filled in question to an operator for corrective actions.

6. A method according to claim 4 or 5, wherein step e) further comprises the step of displaying the third scan with a correction symbol (701, 702, 703).

7. A method according to one of claims 4-6, wherein step e) further comprises the step of displaying the third scan with a test result (704).

8. A method according to one of claims 4-7, wherein step e) further comprises the steps of: providing a relation between a test result (802) and a test mark (1002),
determining the test mark based upon the relation and
displaying the third scan with the test mark.

9. A method according to one of claims 4-8, wherein step e) further comprises the step of automatically creating a test summary (S506), wherein the test summary comprises the test results and/or test marks, of a plurality of third scans (FIG. 10).

10. A method according to claim 9, wherein step e) further comprises the step of displaying the test summary with a part of the third scan.

11. A method according to claim 1, wherein step g) comprises
automatically determining answer locations by comparing a first scan and a second scan, where one of the scans is made from the questionnaire with all answers filled in and the other scan is made from the questionnaire with no answers filled in.

12. A method according to claim 11, wherein step e) comprises the steps of:
finding all answers (S509) on the third scan by using the answer locations
and
creating an overview (S511) of a plurality of third scans comprising a distribution of answers (FIG. 13).

13. A method according to claim 12, wherein step e) further comprises displaying the third scan with the distribution of answers.

14. A method according to one of claims 11-13, wherein step e) further comprises the step of:
presenting an improper filled in question to an operator for corrective actions,

15. A computer program comprising code means that when executed on a computer carry out all steps of one of claims 1-14.

16. An apparatus **characterised by** a processing unit for implementing the steps of one of claims 1-14.

17. A digital copier **characterised by** a processing unit for implementing the steps of one of claims 1-14.

## Patentansprüche

1. Verfahren zur automatischen Analyse eines ausgefüllten Fragebogens mit den Schritten:
a) bereitstellen eines Fragebogens mit Antwortfeldern,
b) scannen einer Kopie des Fragebogens, bei der die Antwortfelder in einer vorbestimmten Weise ausgefüllt sind (S402),
c) bereitstellen eines Fragebogens mit ausgefüllten Antwortfeldern,
d) scannen des ausgefüllten Fragebogens in einem dritten Scan (S405), und
e) automatische Bewertung der Antworten (S406),
**gekennzeichnet durch**
f) scannen einer weiteren Kopie des Fragebogens, bei der die Antwortfelder im Vergleich zu der in Schritt b) (S403) erwähnten gescannten Kopie auf andere und komplementäre Weise ausgefüllt sind,
g) automatische Bestimmung von Antwortfeldern **durch** Vergleich der in den Schritten b) und f) genannten Scans (S404).

2. Verfahren nach Anspruch 1, bei dem der Schritt g) die automatische Bestimmung von Antwortfeldern durch Vergleich eines ersten Scans mit einem zweiten Scan umfaßt, wobei einer der Scans von dem Fragebogen gemacht wird, bei dem alle richtigen Antworten ausgefüllt sind, und der andere Scan von dem Fragebogen gemacht wird, bei dem alle falschen Antworten ausgefüllt sind, mit automatischer Kennzeichnung jedes Antwortfeldes als eine richtige Antwort oder eine falsche Antwort.

3. Verfahren nach Anspruch 2, bei dem der Schritt g) weiterhin die Schritte der Auswahl eines Etiketts auf der Grundlage der Anzahl von Antwortfeldern in dem ersten Scan und der Anzahl von Antwortfeldern in dem zweiten Scan umfaßt.

4. Verfahren nach Anspruch 2 oder 3, bei dem der Schritt e) die folgenden Schritte umfaßt:
finden aller Antworten auf dem dritten Scan, durch Verwendung der Antwortfelder (S502),
entscheiden, für jede Antwort, ob die Antwort eine richtige Antwort oder eine falsche Antwort ist, auf der Grundlage des Etiketts des Antwortfeldes (S503), und
erzeugen eines korrigierten Fragebogens (S505).

5. Verfahren nach Anspruch 4, bei dem der Schritt (e) weiterhin den Schritt der Weiterleitung einer nicht ordnungsgemäß ausgefüllten Frage zu Korrekturzwecken an eine Überwachungsperson umfaßt.

6. Verfahren nach Anspruch 4 oder 5, bei dem der Schritt e) weiterhin den Schritt der Anzeige des dritten Scans mit einem Korrektursymbol (701, 702, 703) umfaßt.

7. Verfahren nach einem der Ansprüche 4 bis 6, bei dem der Schritt e) weiterhin den Schritt der Anzeige des dritten Scans mit einem Prüfungsergebnis (407) umfaßt.

8. Verfahren nach einem der Ansprüche 4 bis 7, bei dem der Schritt e) weiterhin die folgenden Schritte umfaßt:
bereitstellen einer Beziehung zwischen einem Prüfungsergebnis (802) und einer Prüfungszensur (1002),
bestimmen der Prüfungszensur auf der Grundlage der Beziehung, und
anzeigen des dritten Scans mit der Prüfungszensur.

9. Verfahren nach einem der Ansprüche 4 bis 8, bei dem der Schritt e) weiterhin den Schritt der automatischen Erstellung einer Prüfungszusammenfassung (S506) umfaßt, wobei die Prüfungszusammenfassung die Prüfungsergebnisse und/oder Prüfungszensuren mehrerer dritter Scans umfaßt (Fig. 10).

10. Verfahren nach Anspruch 9, bei dem der Schritt e) weiterhin den Schritt der Anzeige der Prüfungszusammenfassung mit einem Teil des dritten Scans umfaßt.

11. Verfahren nach Anspruch 1, bei dem der Schritt g) die automatische Bestimmung von Antwortfeldern durch Vergleich eines ersten Scans mit einem Scan umfaßt, wobei einer der Scans von dem Fragebogen erstellt wird, bei dem alle Antworten ausgefüllt sind und der andere Scan von dem Fragebogen erstellt wird, bei dem keine Antworten ausgefüllt sind.

12. Verfahren nach Anspruch 11, bei dem der Schritt e) die folgenden Schritte umfaßt:
auffinden aller Antworten (S509) auf dem dritten Scan durch Verwendung der Antwortfelder, und
erstellen einer Übersicht (S511) über mehrere dritte Scans, die eine Verteilung von Antworten aufweisen (Fig. 13).

13. Verfahren nach Anspruch 12, bei dem der Schritt e) weiterhin die Anzeige des dritten Scans mit der Verteilung der Antworten umfaßt.

14. Verfahren nach einem der Ansprüche 12 bis 13, bei dem der Schritt e) weiterhin den folgenden Schritt umfaßt:
weiterleiten einer nicht ordnungsgemäß ausgefüllten Frage zu Korrekturzwecken an eine Überwachungsperson.

15. Computerprogramm mit Programmcodemitteln, die, wenn sie auf einem Computer ausgeführt werden, alle Schritte nach einem der Ansprüche 1 bis 14 ausführen.

16. Vorrichtung **gekennzeichnet durch** eine Verarbeitungseinheit zur Implementierung der Schritte nach einem der Ansprüche 1 bis 14.

17. Digitales Kopiergerät, **gekennzeichnet durch** eine Verarbeitungseinheit zur Implementierung der Schritte nach einem der Ansprüche 1 bis 14.

## Revendications

1. Procédé d'analyse automatique d'un questionnaire complété comportant les étapes suivantes :
a) fournir un questionnaire comportant des emplacements réservés aux réponses,
b) balayer une copie du questionnaire dont les emplacements réservés aux réponses sont complétés d'une façon prédéterminée (S402),
c) fournir un questionnaire comportant des emplacements réservés aux réponses complétés,
d) soumettre le questionnaire complété à un troisième balayage (S405), et
e) juger automatiquement les réponses (S406).
**caractérisé en ce qu'**on
f) balaye une autre copie du questionnaire dont les emplacements réservés aux réponses sont complétés d'une façon différente et complémentaire à la copie soumise au balayage mentionnée dans l'étape b) (S403),
g) déterminer automatiquement les emplacements réservés aux réponses en comparant les balayages mentionnés dans l'étape b) et l'étape f) (S404).

2. Procédé selon la revendication 1, dans lequel l'étape g) consiste à déterminer automatiquement les emplacements réservés aux réponses en comparant un premier balayage et un second balayage, où l'un des balayages est réalisé à partir du questionnaire comportant toutes les réponses correctes complétées et l'autre balayage est réalisé à partir du questionnaire comportant toutes les réponses erronées complétées et étiqueter automatiquement chaque emplacement réservé à la réponse comme étant une réponse correcte ou une réponse erronée.

3. Procédé selon la revendication 2, dans lequel l'étape g) comporte en outre les étapes consistant à sélectionner une étiquette en fonction du nombre d'emplacements réservés aux réponses au cours du premier balayage et du nombre d'emplacements réservés aux réponses au cours du second balayage.

4. Procédé selon la revendication 2 ou la revendication 3, dans lequel l'étape e) comprend les étapes suivantes :
trouver toutes les réponses sur le troisième balayage en utilisant les emplacements réservés aux réponses (S502),
déterminer, pour chaque réponse, si la réponse est une réponse erronée ou une réponse correcte en fonction de l'étiquette de l'emplacement réservé à la réponse (S503), et
créer un questionnaire corrigé (S505).

5. Procédé selon la revendication 4, dans lequel l'étape e) comprend en outre l'étape consistant à
présenter une question complétée de façon incorrecte à un opérateur pour qu'il entreprenne des actions correctives.

6. Procédé selon la revendication 4 ou la revendication 5, dans lequel l'étape e) comporte en outre l'étape consistant à
afficher sur le troisième balayage un symbole de correction (701, 702, 703).

7. Procédé selon l'une quelconque des revendications 4-6, dans lequel l'étape e) comporte l'étape consistant à afficher sur le troisième balayage un résultat de test (704).

8. Procédé selon l'une quelconque des revendications 4-7, dans lequel l'étape e) comporte en outre les étapes consistant à :
établir une relation entre un résultat de test (802) et un repère de test (1002),
déterminer le repère de test en fonction de la relation, et
afficher le repère de test sur le troisième balayage.

9. Procédé selon l'une quelconque des revendications 4-8, dans lequel l'étape e) comporte en outre l'étape consistant à créer automatiquement un résumé de test (S506), dans lequel le résumé de test comprend les résultats de test et/ou les repères de test d'une pluralité de troisièmes balayages (FIG. 10).

10. Procédé selon la revendication 9, dans lequel l'étape e) comporte en outre l'étape consistant à afficher le résumé de test avec une partie du troisième balayage.

11. Procédé selon la revendication 1, dans lequel l'étape g) consiste à :
déterminer automatiquement des emplacements réservés aux réponses en comparant un premier balayage et un second balayage, où l'un des balayages est réalisé à partir du questionnaire dont toutes les réponses sont complétées et l'autre balayage est réalisé à partir du questionnaire ne comportant aucune réponse complétée.

12. Procédé selon la revendication 11, dans lequel l'étape e) comporte les étapes consistant à :
trouver toutes les réponses (S509) sur le troisième balayage en utilisant les emplacements réservés aux réponses, et
créer un aperçu (S511) d'une pluralité de troisièmes balayages comportant une répartition des réponses (FIG. 13).

13. Procédé selon la revendication 12, dans lequel l'étape e) consiste en outre à afficher le troisième balayage avec la répartition des réponses.

14. Procédé selon l'une quelconque des revendications 11-13, dans lequel l'étape e) comporte en outre l'étape suivante :
présenter une question complétée de façon incorrecte à un opérateur pour qu'il entreprenne des actions correctives.

15. Programme informatique comportant des moyens de codage qui, lorsqu'ils sont exécutés sur un ordinateur, mettent en oeuvre toutes les étapes de l'une des revendications 1-14.

16. Appareil **caractérisé par** une unité centrale permettant de réaliser les étapes de l'une des revendications 1-14.

17. Copieur numérique **caractérisé par** une unité centrale permettant de réaliser les étapes de l'une des revendications 1-14.
